# FASCICULE DE BREVET EUROPEEN

(11) **EP 3 930 264 B1**
(45) Date de publication et mention de la délivrance du brevet: **02.09.2026**
(21) Numéro de dépôt: 21175203.5
(22) Date de dépôt: 21.05.2021
(51) Int. Cl.: H04L 12/28

(54) **PROCÉDÉ ET DISPOSITIF DE GESTION DE CONSOMMATION DE CONTENUS DANS UN RÉSEAU DOMESTIQUE ÉTENDU**
VERFAHREN UND VORRICHTUNG FÜR DEN UMGANG MIT DER INHALTSBEREITSTELLUNG IN EINEM ERWEITERTEN HEIMNETZWERK
METHOD AND APPARATUS FOR MANAGING CONTENT PROVISION IN AN EXTENDED HOME NETWORK

(30) Priorité: 23.06.2020 FR 2006548
(43) Date de publication de la demande: 29.12.2021
(73) Titulaire: Orange, 92130 Issy-les-Moulineaux (FR)
(72) Inventeur: GOULEAU, Emmanuel, 92326 CHATILLON CEDEX (FR); LEDUBY, Jean-Bernard, 92326 CHATILLON CEDEX (FR)
(74) Mandataire: Vidon Brevets & Stratégie

(56) Documents cités:
- FR-A1- 3 089 372
- US-A1- 2014 167 929
- US-A1- 2016 241 642

## Description

### Domaine technique de l'invention

L'invention concerne la gestion d'un réseau domestique étendu connecté à un réseau de communication de données, tel que l'Internet. L'invention concerne plus particulièrement la gestion du lancement d'applications multi-écrans au sein d'un réseau domestique étendu. Par réseau domestique étendu d'un utilisateur, aussi connu sous le nom de Virtual Home Network en anglais, on entend l'ensemble comprenant le réseau domestique principal de l'utilisateur et un réseau secondaire, qui peut être le réseau domestique de sa résidence secondaire ou un réseau visité, comme le réseau domestique d'un tiers ou un réseau visité mobile ou Internet.

### Technique antérieure

Il existe aujourd'hui des applications pour téléphone intelligent (« *smartphone* » en anglais) qui permettent de lancer, via le smartphone, des applications ou services auxquels un utilisateur a souscrit, sur un autre équipement de l'utilisateur. Par exemple, la plupart des opérateurs de services Internet qui fournissent à leur souscripteur un service TV, c'est-à-dire un service de consommation de contenus numériques, mettent à leur disposition des applications à installer sur un terminal mobile (par exemple smartphone, tablette, ...) qui permettent de lancer un service TV sur un deuxième écran, typiquement une télévision ou un décodeur connecté(e) à la passerelle domestique, via le terminal mobile.

Un autre exemple est le lancement de visionnage de vidéos diffusées par une plateforme de partage de vidéos, par exemple YouTube^{®}, sur une passerelle multimédia, par exemple une clé Google ChromeCast^{®} ou une clé munie d'un décodeur TV, connectée à un dispositif d'affichage, par exemple une télévision ou un vidéo projecteur. Pour lancer un tel service, l'utilisateur installe une application de pilotage sur son terminal mobile qui lui permet de demander à la passerelle multimédia le lancement de la vidéo. Selon cet exemple, la passerelle multimédia connectée à un réseau de communication reçoit des flux vidéo de la plateforme de partage vidéo. La diffusion des vidéos est commandée par l'application installée sur le terminal mobile.

De tels services ou applications de consommation de contenus numériques sont communément appelés service TV ou application multi-écrans.

Il existe actuellement plusieurs offres de services de consommation de contenus numériques disponibles sur un réseau domestique local ou en itinérance, auxquels peut souscrire un utilisateur :
- l'IPTV *(« Internet Protocol TeleVision »* en anglais) comprend notamment la télévision en direct, la vidéo à la demande (« *Video on Demand »* ou VOD en anglais), et est accessible via un réseau domestique local connecté à un réseau de communication de données. Les services TV et les droits d'accès à ces services TV *(« Digital Rights Management »* ou DRM en anglais) sont généralement associés à l'abonnement de l'utilisateur (par exemple son abonnement à la Fibre ou au haut débit). Ces droits d'accès sont gérés localement par des composants du réseau domestique, et limités aux décodeurs TV (« *Set Top Box »* ou STB en anglais) du réseau domestique local. Les droits d'accès à ces services TV sont reçus par le décodeur TV afin de décoder les flux de données ;
- l'offre OTT (« *over-the-top* » en anglais), ou hors du fournisseur d'accès à Internet, est un service de livraison d'audio, de vidéo et d'autres médias sur Internet sans la participation d'un opérateur de services Internet traditionnel dans le contrôle ou la distribution du contenu numérique. Les services TV et les droits d'accès TV sont associés au compte e-mail principal de l'utilisateur, lui-même associé à l'abonnement haut débit ou Fibre de l'utilisateur. Ces droits d'accès sont gérés par des composants situés dans un réseau domestique étendu de l'utilisateur. Actuellement, les solutions de gestion de l'utilisation et des droits d'accès à l'offre OTT proposées par les fournisseurs d'offre OTT (Netflix^{®}, Disney+^{®}...) reposent sur un composant localisé soit dans le nuage, ou « Cloud » (à l'image du fonctionnement de YouTube), soit localement sur un équipement tel qu'une Set Top Box (STB) ou un stick TV HDMI (par exemple la Clé TV^{®} d'Orange). Ces solutions de gestion des équipements restent très verticales et propres à l'offre d'un fournisseur OTT. Elles ne sont pas visibles de l'opérateur d'accès à Internet et ne permettent pas une offre d'agrégation de contenus numériques par celui-ci ;
- les offres mobiles en itinérance, pour lesquelles les services et droits d'accès à du contenu numérique sont associés à l'abonnement mobile de l'utilisateur.

La généralisation de l'accès Internet, notamment via la Fibre, offre aux utilisateurs plus de bande passante du réseau Internet et leur permet d'utiliser de plus en plus de services du réseau Internet, notamment sur différents équipements domestiques situés non plus uniquement localement au niveau du domicile principal de l'utilisateur, mais situés dans un réseau domestique étendu, c'est-à-dire sur un réseau comprenant le réseau domestique principal de l'utilisateur et un réseau secondaire, qui peut être le réseau domestique de sa résidence secondaire ou un réseau visité, comme le réseau domestique d'un tiers ou un réseau visité mobile ou Internet.

Par ailleurs, le développement des approches logicielles de virtualisation des services et des fonctions réseau ou NFV *(« Network Function Virtualization »* en anglais) et SDN *(« Software Defined Network »* en anglais) ont permis d'enrichir l'actuelle passerelle domestique et de développer de nouveaux services sur cette passerelle domestique tels que:
- « Super LAN » : réseau local ou LAN *(« Local Area Network* » en anglais) étendu entre deux passerelles domestiques (mode « bridgé ») « en un clic », avec VPN (pour *« Virtual Private Network »,* réseau privé virtuel) résidentiels « Point - Multipoints » et découverte des équipements dans deux environnements domestiques distincts ;
- « Contrôle parental » : contrôle parental plus performant que ceux actuellement disponibles sur la passerelle domestique, notamment en utilisant des traitements plus complexes (par exemple en utilisant l'Intelligence Artificielle). Ce contrôle parental amélioré permet par exemple d'aller au-delà du filtrage d'URL (« *Uniform Resource Locator »* en anglais) disponible sur la passerelle domestique ;
- «NAS Virtuel » *(« Network Attached Storage »* en anglais) : Disque réseau personnel dans un composant « Virtual Home Gateway » dans le réseau avec des caractéristiques comme : toujours accessible (« *always-on* » en anglais), accessible à distance, sauvegarde garantie, ...etc.

Ces approches NFV et SDN permettent d'étendre les services disponibles sur le réseau domestique au-delà du réseau physique, c'est-à-dire de la ligne de l'abonné (comme par exemple la liaison fibre optique) et permettent à l'utilisateur de les utiliser où qu'il soit. Les services ne sont plus attachés au domicile de l'utilisateur, mais à l'utilisateur lui-même.

Il en ressort que l'environnement domestique de l'utilisateur est de plus en plus complexe et peut alors comprendre un grand nombre d'équipements domestiques nécessitant une connexion Internet et répartis dans un environnement réseau étendu. Le point de blocage réseau se situe maintenant au niveau du réseau domestique étendu de l'utilisateur et non plus au niveau de son réseau d'accès.

L'essor décentralisé des différentes offres de services mentionnées ci-dessus, dans lequel chaque application ou service est attaché à un domicile (par exemple à la ligne fibre de l'utilisateur) ou à l'utilisateur (comme par exemple à son adresse e-mail), ne permet pas de contrôler ces services au sein de l'environnement domestique étendu de l'utilisateur. Ceci peut impacter la qualité de service fournie à l'utilisateur si celui-ci souhaite bénéficier de l'ensemble de ses services TV souscrits en dehors de son domicile principal.

De plus, il n'existe pas de contrôle centralisé au niveau utilisateur (droits d'accès, contrôle parental par exemple).

Le document FR3089372 divulgue une passerelle de gestion d'un réseau principal d'un utilisateur. Le document US2016/241642 divulgue un dispositif de gestion des deux réseaux locaux pour le partage multimédia/service multi-écrans entre lesdits réseaux. Le document US2014/167929 divulgue la transmission d'une requête d'enregistrement d'un équipement local vers une passerelle du réseau local, dont la requête est envoyée d'un utilisateur localisé à l'extérieur dudit réseau.

### Présentation de l'invention

L'invention vient améliorer l'état de la technique. Elle propose à cet effet un dispositif de gestion d'un réseau domestique étendu. Ce réseau domestique étendu comprend un réseau domestique principal dont l'utilisateur a une souscription pour des services auprès d'un opérateur, et au moins un réseau local secondaire visité par l'utilisateur, ledit au moins un réseau secondaire comprenant au moins un équipement adapté pour exécuter au moins une application à partir d'une adresse de localisation de ressource. Cette adresse de localisation de ressource permet à l'équipement d'accéder, via un réseau de communication, à au moins une donnée permettant l'exécution de ladite au moins une application sur l'équipement. Le dispositif de gestion selon l'invention est configuré pour :
- recevoir, via le réseau domestique principal, une requête d'association dudit au moins un équipement du réseau secondaire avec ladite au moins une application,
- mémoriser une liste d'équipements du réseau secondaire en association avec ladite au moins une application,
- recevoir une requête de lancement de ladite au moins une application, en provenance d'un terminal, via le réseau secondaire, cette requête comprenant un identifiant de ladite au moins une application,
- fournir au terminal, sur réception de la requête de lancement, la liste d'équipements,
- recevoir, en provenance du terminal, un identifiant d'un équipement de la liste.

Ainsi, selon l'invention, un dispositif de gestion du réseau domestique étendu d'un utilisateur est proposé. Par réseau domestique étendu d'un utilisateur, aussi connu sous le nom de Virtual Home Network en anglais, on entend l'ensemble comprenant le réseau domestique principal de l'utilisateur et un réseau secondaire, qui peut être le réseau domestique de sa résidence secondaire ou un réseau visité, comme le réseau domestique d'un tiers ou un réseau visité mobile ou Internet. Un tel dispositif de gestion du réseau domestique étendu peut être compris dans un équipement du réseau de l'opérateur auprès duquel est abonné l'utilisateur. Les ressources de stockage et éventuellement de traitement dans le réseau de communication de l'opérateur (ressources dans le "Cloud" en anglais), qui sont dédiées à l'utilisateur, font partie du réseau domestique étendu de l'utilisateur.

Par réseau domestique principal on entend un réseau de communication local se trouvant dans une résidence principale correspondant à l'habitation occupée de façon habituelle et à titre principal par l'utilisateur. Il s'agit du réseau de communication local pour lequel l'utilisateur a souscrit une offre d'accès à Internet auprès de l'opérateur. Par réseau secondaire, on entend un réseau de communication utilisé temporairement par l'utilisateur, qui peut être le réseau domestique de sa résidence secondaire, ou un réseau visité mobile ou fixe.

Avantageusement, un tel dispositif de gestion du réseau domestique étendu centralise les informations nécessaires à l'exécution des applications susceptibles d'être exécutées par un équipement compris dans l'environnement domestique étendu de l'utilisateur, et pilotées via un terminal de l'utilisateur, comme par exemple un smartphone. En d'autres termes, le dispositif de gestion selon l'invention centralise les droits d'accès aux applications multi-écrans des équipements du réseau domestique étendu de l'utilisateur, et notamment des équipements compris dans un réseau secondaire, comme par exemple un réseau domestique local d'une résidence secondaire, ou un réseau domestique d'un tiers chez lequel l'utilisateur est en visite.

Pour cela, le dispositif permet de configurer l'accès distant aux services ou applications multi-écrans souscrits par l'utilisateur, via le réseau domestique principal, en associant à chaque équipement du réseau secondaire, des droits d'accès à un service ou application donné. Il est ainsi possible de configurer un accès distant aux services audio-visuels souscrits par l'utilisateur depuis son réseau domestique principal. En d'autres termes, l'utilisateur peut alors paramétrer à quel service ou application multi-écrans il peut accéder en dehors de sa résidence principale.

Le dispositif de gestion du réseau domestique étendu mémorise alors une liste d'équipements du réseau secondaire autorisés à accéder à une application multi-écrans souscrite par l'utilisateur et renvoie à l'utilisateur la liste des équipements du réseau secondaire sur lesquels l'application peut être exécutée, afin que l'utilisateur puisse sélectionner l'équipement souhaité.

Le dispositif de gestion selon l'invention permet ainsi de séparer l'attachement actuel d'un abonnement à des services souscrits par l'utilisateur, comme par exemple une offre IPTV ou OTT, du seul réseau domestique principal.

Ainsi, l'exécution de l'application multi-écrans n'est plus liée à un équipement appartenant nécessairement au réseau domestique principal. Les droits des services sont attachés à l'utilisateur et accessibles depuis son réseau domestique « étendu » (« extended LAN » en anglais) et non plus à son réseau domestique local principal (« LAN » en anglais), tout en restant maitrisé par l'opérateur. En d'autres termes, l'abonnement à un service de contenus numériques n'est plus attaché à la ligne (Haut Débit, Fibre etc....), mais à l'utilisateur.

Ainsi, grâce à l'invention, la gestion du lancement de telles applications est centralisée au niveau du dispositif de gestion du réseau domestique étendu, compris par exemple dans une passerelle virtuelle sur le réseau de communication de l'opérateur (« Cloud » en anglais). Une telle centralisation permet plus de souplesse pour contrôler le lancement des applications disponibles, par exemple pour authentifier ou autoriser le lancement d'une application. L'utilisation d'un dispositif de gestion centralisée permet la découverte des différents équipements sur un réseau secondaire appartenant au réseau domestique étendu de l'utilisateur et la mise à jour de la disponibilité et de la compatibilité de ces équipements pour l'exécution de l'application.

En effet, selon l'art antérieur, une requête de lancement d'une application est transmise du terminal directement vers l'équipement qui doit exécuter l'application, et ne permet donc pas de contrôler ce lancement.

De plus, le dispositif de gestion du réseau domestique selon l'invention permet de configurer les sessions de communication entre l'application et l'équipement de visualisation retenu par l'utilisateur et d'assurer plus de sécurité et de confidentialité à l'utilisateur. En effet, selon l'invention, les requêtes de lancement et la fourniture de l'URL sont faites via le réseau domestique étendu de l'utilisateur. Ainsi, aucune information concernant les applications disponibles ou les équipements disponibles n'est transmise en dehors du réseau domestique étendu. Au contraire, selon l'art antérieur, pour certains services fournis par des fournisseurs tiers, autres que l'opérateur auprès duquel l'utilisateur est abonné, les requêtes de lancement d'une application sont transmises à un serveur du fournisseur tiers en dehors du réseau domestique étendu. Ainsi, cette centralisation permet également de contrôler les messages échangés et donc de contrôler la charge réseau du réseau domestique étendu et des communications émises vers ou reçues du réseau de communication auquel le réseau domestique étendu est connecté.

Selon un mode particulier de réalisation de l'invention, le dispositif de gestion d'un réseau domestique étendu est configuré pour, en outre :
- mémoriser une liste d'applications comprenant au moins un identifiant de ladite au moins une application, cet identifiant étant associé à l'adresse de localisation de ressource,
- fournir à l'équipement ou au terminal, via le réseau secondaire, l'adresse de localisation de ressource associée à l'identifiant.

Selon ce mode de réalisation, le dispositif de gestion centralise les adresses de localisation de ressources permettant d'obtenir les données nécessaires à l'exécution de l'application. Par exemple, dans le cas d'une application de VOD, l'adresse de localisation de ressources permet d'accéder à un contenu audiovisuel, par exemple un contenu enregistré dans le réseau sur requête de l'utilisateur, ou à une page web permettant de sélectionner un contenu audio-visuel dans un catalogue. D'autres exemples de données sont possibles, tout comme d'autres exemples d'applications. Ainsi, dans un autre exemple, dans le cas d'une application de service OTT (par exemple YouTube^{®} ou Netflix^{®}), l'adresse de localisation de ressources permet d'accéder au catalogue de contenus audio-visuels proposés par le service OTT auquel l'utilisateur a souscrit.

Selon un autre mode particulier de réalisation de l'invention, la liste d'équipements du réseau secondaire associée à ladite au moins une application est mise à jour lors de la réception d'une notification d'enregistrement d'un nouvel équipement dans le réseau secondaire en fonction d'une information de capacités du nouvel équipement comprise dans la notification d'enregistrement.

Selon ce mode particulier de l'invention, l'utilisation d'un dispositif de gestion centralisée d'un réseau domestique étendu permet une gestion des équipements permettant de visualiser un contenu donné (programmes TV, VOD par abonnement) ou de consommer un service Internet donné (YouTube^{®}, NetFlix^{®}, ...).

Avantageusement, le dispositif de gestion dispose d'une liste d'équipements connectés au réseau domestique étendu et capables d'exécuter l'application qui est toujours à jour.

Par exemple, une telle information de capacités peut correspondre à un format de contenus audio-visuels supportés ou non, par exemple un standard de compression particulier, ou un support de format 4K, ou bien un paramètre de qualité réseau, par exemple un débit minimal disponible sur le réseau secondaire pour le lancement d'une vidéo, ou tout autre paramètre.

Ainsi, le dispositif selon l'invention permet notamment de gérer les qualités disponibles sur ces équipements et de visualiser le contenu souhaité grâce au contrôle par l'opérateur de la configuration réseau, améliorant ainsi la qualité de service (« Quality Of Service » en anglais, ou QoS). Ce contrôle peut être statique (abonnement d'accès réseau fixe et mobile) et/ou dynamique (test de bande passante depuis l'application mobile). En d'autres termes, le client n'a pas à sélectionner lui-même la qualité de la vidéo comme il le ferait dans le cadre d'une offre OTT par exemple. Dans le cas d'une vidéo OTT, la qualité de la restitution de la vidéo pourrait être mauvaise si les capacités du réseau du client sont insuffisantes. Le dispositif de gestion d'un réseau domestique étendu selon l'invention, permet à l'opérateur de choisir la qualité optimale selon la configuration du réseau domestique étendu de l'utilisateur qu'il connait.

Selon un autre mode particulier de réalisation de l'invention, le dispositif de gestion d'un réseau domestique étendu est configuré en outre pour vérifier si l'équipement est autorisé à exécuter l'application, ladite adresse de localisation de ressource étant fournie à l'équipement par le dispositif de gestion de réseau domestique étendu si cet équipement est autorisé à exécuter l'application.

Selon ce mode particulier de réalisation de l'invention, avant de lancer l'exécution de l'application sur l'équipement, le dispositif de gestion met en œuvre un contrôle d'autorisation. Par exemple, un tel contrôle peut permettre de contrôler les droits d'accès de l'utilisateur au service de l'application demandée, ou bien d'appliquer un contrôle parental vis-à-vis de l'application demandée ou de l'usage de l'équipement visé, ou encore de contrôler si le réseau domestique dispose du débit nécessaire pour permettre à l'équipement d'exécuter l'application demandée.

Selon un autre mode particulier de réalisation de l'invention, la liste d'équipements associée à une application peut être déterminée en fonction d'une information de préférence d'équipements qui est associée à l'application ou à un groupe d'applications et qui est fournie par l'utilisateur par exemple.

L'invention concerne également une passerelle domestique virtuelle comprenant un dispositif de gestion selon l'un quelconque des modes particuliers décrits ci-dessus.

L'invention concerne également un équipement placé dans un réseau de communication et comprenant des ressources dédiées à un réseau domestique étendu d'un utilisateur abonné auprès d'un opérateur du réseau de communication. Un tel équipement comprend un dispositif de gestion selon l'un quelconque des modes particuliers décrits ci-dessus.

L'invention concerne également un procédé de gestion d'un réseau domestique étendu. Ce réseau domestique étendu comprend un réseau domestique principal dont l'utilisateur a une souscription pour des services auprès d'un opérateur, et au moins un réseau local secondaire visité par l'utilisateur, ledit au moins un réseau secondaire comprenant au moins un équipement adapté pour exécuter au moins une application à partir d'une adresse de localisation de ressource. Cette adresse de localisation de ressource permet à l'équipement d'accéder, via un réseau de communication, à au moins une donnée permettant l'exécution de ladite au moins une application sur cet équipement. Un tel procédé comprend :
- une réception, via le réseau domestique principal, d'une requête d'association dudit au moins un équipement du réseau secondaire avec ladite au moins une application,
- une mémorisation d'une liste d'équipements du réseau secondaire en association avec ladite au moins une application,
- une réception d'une requête de lancement de ladite au moins une application, en provenance d'un terminal, via le réseau secondaire, cette requête comprenant l'identifiant de ladite au moins une application,
- une fourniture, au terminal, sur réception de la requête de lancement, de la liste d'équipements,
- une réception, en provenance du terminal, d'un identifiant d'un équipement de la liste.

Selon un mode particulier de réalisation de l'invention, le procédé comprend en outre :
- une mémorisation d'une liste d'applications comprenant au moins un identifiant de ladite au moins une application, cet identifiant étant associé à l'adresse de localisation de ressource,
- une fourniture, audit équipement ou au terminal, via le réseau secondaire, de l'adresse de localisation de ressource associée à cet identifiant.

Selon un autre mode particulier de réalisation de l'invention, le procédé de gestion d'un réseau domestique étendu comprend en outre :
- une réception d'une notification d'enregistrement d'un nouvel équipement dans le réseau secondaire comprenant une information de capacités de ce nouvel équipement ;
- une mise à jour de la liste d'équipements du réseau secondaire associée à ladite au moins une application en fonction de l'information de capacités du nouvel équipement.

Selon un autre mode particulier de réalisation de l'invention, le procédé de gestion d'un réseau domestique étendu comprend en outre une vérification si l'équipement est autorisé à exécuter l'application, l'adresse de localisation de ressource étant fournie à l'équipement par le dispositif de gestion de réseau domestique étendu si cet équipement est autorisé à exécuter l'application.

L'invention concerne également un programme d'ordinateur comportant des instructions pour la mise en œuvre du procédé ci-dessus selon l'un quelconque des modes particuliers de réalisation décrits précédemment, lorsque le programme est exécuté par un processeur. Le procédé peut être mis en œuvre de diverses manières, notamment sous forme câblée ou sous forme logicielle.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig. 1****] :** la figure 1 illustre un environnement de mise en œuvre permettant de lancer une application multi-écrans dans un réseau domestique selon l'art antérieur ;
**[****Fig. 2A****] :** la figure 2A illustre un exemple d'environnement de mise en œuvre du procédé de gestion d'un réseau domestique étendu selon un mode de réalisation de l'invention ;
**[****Fig. 2B****]** : la figure 2B illustre un autre exemple d'environnement de mise en œuvre du procédé de gestion d'un réseau domestique étendu selon un autre mode de réalisation de l'invention ;
**[****Fig. 3****] :** la figure 3 illustre des étapes de la phase d'initialisation du procédé de gestion d'un réseau domestique étendu selon un mode particulier de réalisation de l'invention ;
**[****fig. 4A****]** : la figure 4A illustre des étapes de la phase de découverte du procédé de gestion d'un réseau domestique étendu selon un mode particulier de réalisation de l'invention en lien avec la figure 2A ;
**[****Fig.4B****]** : la figure 4B illustre des étapes de la phase de découverte du procédé de gestion d'un réseau domestique étendu selon un mode particulier de réalisation de l'invention en lien avec la figure 2B ;
**[****Fig.5****]** : la figure 5 illustre un dispositif de gestion d'un réseau domestique étendu selon un mode particulier de réalisation de l'invention.

### Description détaillée de modes de réalisation

Le principe général de l'invention repose sur une gestion centralisée, et contrôlée par l'opérateur du réseau auprès duquel un utilisateur a souscrit un abonnement, de la consommation de services de contenus, dans un réseau domestique étendu. Ainsi, de tels services de contenus ne sont plus attachés au seul réseau domestique principal de l'utilisateur, mais deviennent accessibles depuis un réseau secondaire, dans lequel l'utilisateur est en déplacement, tout en restant maîtrisés par l'opérateur, tant en termes de qualité de service que de sécurité des droits. De tels services de contenus ne sont donc plus associés au seul domicile de l'utilisateur, mais peuvent être plus généralement rattachés à une notion de foyer de l'utilisateur, qui peut être multi-sites, et multi-personnes.

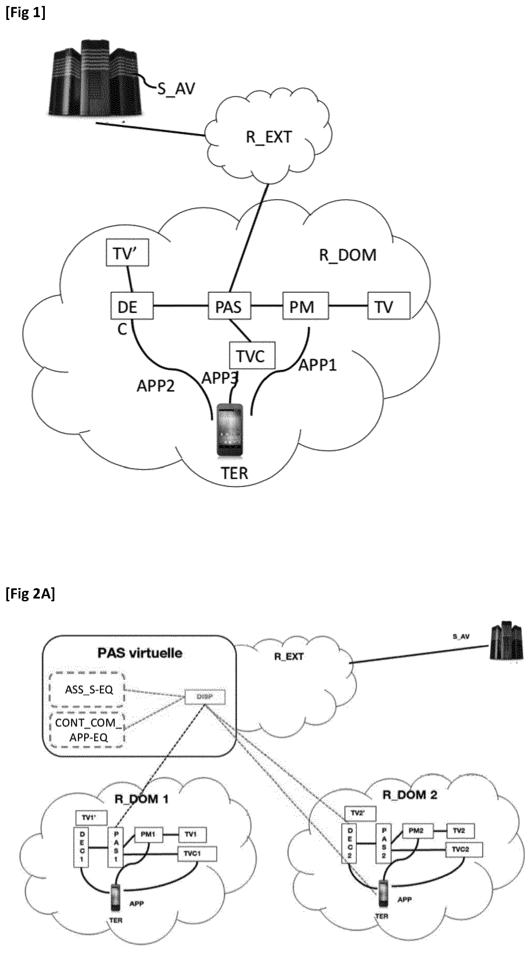

La **figure 1** illustre un exemple d'un environnement de mise en œuvre permettant de lancer une application multi-écrans dans un réseau domestique selon l'art antérieur.

On appelle application multi-écrans, une application de contenus multimédias installée sur un équipement audio-visuel, également appelé équipement multimédia par la suite, comme par exemple une télévision connectée (TVC), permettant de consommer un service de programme ou de contenus multimédias, aussi appelé service TV, auquel l'utilisateur a souscrit.

L'application multi-écrans est adaptée pour recevoir et décoder des flux de contenus multimédias et les restituer sur l'équipement multimédia ou tout autre dispositif de restitution. Une telle application multi-écrans est adaptée à être commandée par une autre application, dite application de pilotage, installée sur un terminal mobile, par exemple un smartphone (pour téléphone intelligent) ou tablette, distinct de l'équipement multimédia, et adapté pour exécuter également d'autres types d'applications. Pour cela, chaque équipement multimédia dispose de sa propre table de correspondance application multi-écrans/URL de lancement de l'application multi-écrans. Par exemple, une telle table de correspondance est basée sur le protocole DIAL. L'URL associée à l'application multi-écrans permet à l'équipement multimédia recevant une commande de lancement d'obtenir les données de l'application multi-écrans pour l'exécution de l'application multi-écrans. Par exemple, dans le cas d'une application multi-écrans de visionnage de contenus vidéos, l'URL permet d'accéder au contenu vidéo.

L'environnement illustré en figure 1 comprend notamment un réseau domestique R-DOM mis en œuvre par une passerelle domestique PAS connectée à un réseau de communication de données extérieur R_EXT d'un opérateur de réseau. Le réseau domestique R-DOM comprend un certain nombre d'équipements multimédias domestiques connectés au réseau domestique R_DOM de la passerelle domestique PAS, et notamment:
- une passerelle multimédia PM, par exemple une clé multimédia HDMI *(« High-Definition Multimedia Interface* » en anglais) ou MHL (« *Mobile High-Definition Link »* en anglais) ou clé TV, connectée à la passerelle domestique PAS en filaire ou en WiFi et connectée à un écran TV, par exemple une télévision, et adaptée pour exécuter une application multi-écrans sur réception d'une requête de lancement en provenance d'une application de pilotage APP1 dédiée installée sur un terminal, par exemple le terminal mobile TER,
- une télévision connectée TVC connectée à la passerelle domestique PAS en filaire ou en WiFi, et adaptée pour exécuter une application multi-écrans sur réception d'une requête de lancement en provenance d'une application de pilotage APP3 dédiée installée sur le terminal TER,
- un décodeur DEC connecté à la passerelle domestique PAS en filaire ou en WiFi et à un écran TV', le décodeur DEC étant adapté pour exécuter une application multi-écrans sur réception d'une requête de lancement en provenance d'une application de pilotage APP2 dédiée installée sur le terminal TER.

Par exemple, afin de lancer (« *cast »* en anglais) la lecture d'une vidéo par la passerelle multimédia PM sur l'écran TV, l'utilisateur utilise son terminal mobile TER sur lequel il a par exemple installé l'application APP1 dédiée à ce service. Sur requête de l'utilisateur, l'application APP1 communique avec la passerelle multimédia PM pour demander le lancement de la vidéo. La passerelle multimédia PM récupère alors une URL permettant d'accéder à la vidéo. Le contenu vidéo est transmis par un serveur multimédia S_AV, via le réseau de communication R_EXT, la passerelle domestique PAS et le réseau domestique R_DOM à la passerelle multimédia PM, afin d'être affiché via l'écran TV.

Selon d'autres exemples, un mécanisme similaire peut être mis en œuvre pour exécuter des applications multi-écrans respectivement sur les équipements domestiques DEC et TVC.

Il apparaît ainsi que selon l'art antérieur, lors du lancement d'une application multi-écrans, chaque application est gérée de manière indépendante via une application de pilotage (APP1, APP2, APP3) dédiée installée sur un terminal. En d'autres termes, c'est l'application de pilotage (APP1, APP2, APP3) elle-même qui décide de son lancement, sur requête de l'utilisateur, et de l'équipement sur lequel exécuter l'application, la passerelle multimédia PM dans l'exemple décrit ici.

Lorsque le réseau domestique comprend plusieurs équipements permettant de lancer des applications multi-écrans, et que ces applications sont lancées chacune sans aucun contrôle, par exemple sans contrôle de la bande passante disponible au sein du réseau domestique, la qualité de service du réseau domestique risque d'être dégradée, sans explication pour l'utilisateur. Ceci est encore plus problématique si l'on considère un réseau domestique étendu, qui comprend non seulement les équipements du réseau domestique R_DOM, mais également un ou plusieurs équipements d'un réseau secondaire, qui peut être le réseau domestique d'une résidence secondaire de l'utilisateur ou un autre réseau sur lequel il est en itinérance.

De plus, chaque équipement multimédia (PM, DEC, TVC) dispose de sa propre table de correspondance associant à une application multi-écrans une adresse URL permettant d'accéder aux données de l'application multi-écrans. Il n'est donc ainsi pas possible de lancer une application multi-écrans particulière sur un autre équipement multimédia que l'équipement multimédia auquel elle a été associée.

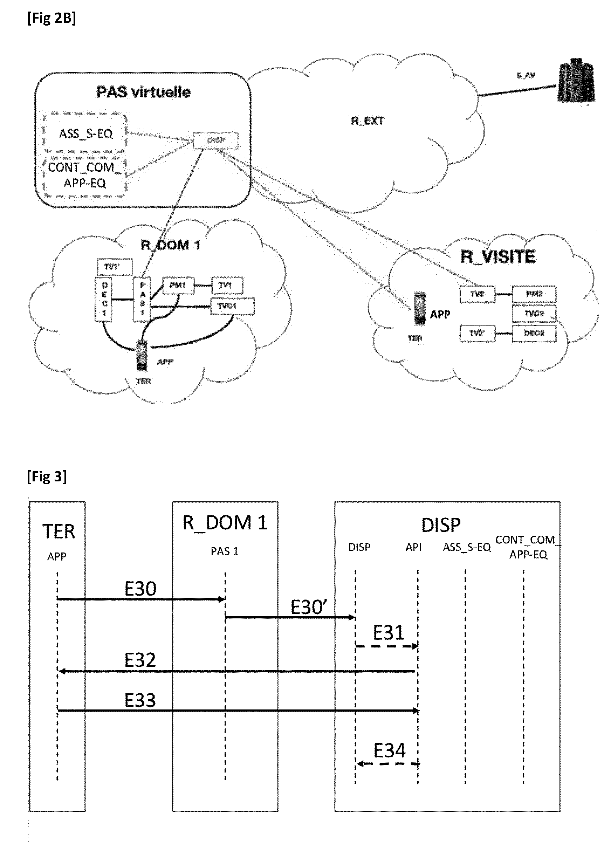

Les **figures 2A** **et** **2B** illustrent des exemples d'environnement de mise en œuvre du procédé de gestion d'un réseau domestique étendu selon des modes particuliers de réalisation de l'invention.

Le réseau domestique étendu comprend un réseau domestique principal R_DOM1 et un réseau secondaire. Dans la **figure 2A****,** le réseau secondaire est un réseau domestique secondaire R_DOM2, correspondant au réseau de communication local d'une résidence secondaire de l'utilisateur, comme par exemple sa résidence de vacances. Dans la **figure 2B****,** le réseau secondaire est un réseau visité R_VISITE mobile, ou Internet, sans passerelle opérateur secondaire. Il peut par exemple s'agir du réseau domestique d'un tiers ou d'un ami chez lequel l'utilisateur est en visite, ou d'un réseau public WiFi d'accès à Internet dans lequel l'utilisateur est en itinérance. L'environnement des réseaux domestiques principal R_DOM1 et secondaire R_DOM2 ou visité R_VISITE, comprennent les mêmes équipements domestiques que ceux présentés en relation avec la figure 1.

Par réseau domestique étendu, on entend un ensemble comprenant un réseau domestique principal R_DOM1, attaché par exemple à la résidence principale de l'utilisateur, au moins un réseau secondaire, comme par exemple un réseau domestique secondaire R_DOM2 attaché à une résidence secondaire de l'utilisateur (figure 2A) ou un réseau visité mobile ou fixe R_VISITE (figure 2B), et des ressources dédiées à l'utilisateur dans le réseau de l'opérateur de services R_EXT (« Cloud »).

En effet, grâce aux approches SDN, *(« Software Defined Networks* » en anglais), ou réseau défini par logiciel, et NFV (« *Network Function Virtualization* » en anglais), ou virtualisation des fonctions réseaux, il est possible de séparer les services et les infrastructures les hébergeant dans des contextes différents. L'approche SDN consiste à séparer la couche de gestion des flux de la couche de données qui transmet le trafic réseau, l'objectif de cette dissociation étant de créer un réseau centralisé et programmable. Elle permet de définir des liaisons sécurisées nécessaires (débit, sécurité d'accès, chiffrement, ...) entre les composants locaux dans le réseau domestique et les composants distants dans le réseau étendu. Un portail d'administration de services permet à l'utilisateur d'activer un service sur une durée donnée via un portail d'administration de services sur une logique de consommation à l'usage et non plus d'abonnement. L'approche NFV consiste à virtualiser les services réseaux pour se débarrasser des matériels dédiés.

Ainsi, comme décrit précédemment, en appliquant ces approches logicielles au réseau domestique d'un utilisateur, il est possible de développer un réseau domestique étendu et d'enrichir la passerelle domestique pour qu'elle comprenne de nouveaux services tels que : « Super LAN », « Contrôle parental », «NAS virtuel ».

Un service peut alors être activé sur un composant local (comme par exemple une passerelle domestique) ou sur un composant réseau disponible dans le réseau de l'opérateur dans une infrastructure virtualisée (comme par exemple une passerelle virtuelle) en cœur de réseau *(« Cloud Computing* » en anglais) ou en bordure de réseau (« *Edge computing* » en anglais).

Selon l'invention, le réseau domestique étendu comprend en outre un dispositif DISP de gestion du réseau domestique étendu, configuré pour mettre en œuvre le procédé de gestion de réseau domestique étendu selon l'un quelconque des modes particuliers de réalisation de l'invention décrits ci-dessous.

Dans le mode de réalisation selon l'invention décrit ici, le dispositif DISP de gestion de réseau domestique étendu est compris dans une passerelle virtuelle PAS située dans le réseau de communication de l'opérateur (« Cloud ») R_EXT. On parle alors de dispositif virtuel de gestion de réseau domestique étendu.

Selon l'invention, l'utilisateur peut à partir du réseau domestique principal R_DOM1, configurer un accès distant aux services de consommation de contenus ou application multi-écrans auxquels il a souscrit, pour des équipements du réseau étendu, comme par exemple des équipements multimédias (PM2, TVC2, DEC2) d'un réseau secondaire (réseau domestique secondaire R_DOM2 ou réseau visité mobile ou fixe R_VISITE).

En d'autres termes, selon l'invention, le dispositif virtuel DISP est configuré pour recevoir, via le réseau domestique principal R_DOM1, une requête d'association d'au moins un équipement (DEC2, PM2, TVC2) du réseau secondaire (R_DOM2, R_VISITE) avec au moins une application multi-écrans. Le dispositif DISP mémorise alors une liste d'équipements multimédia du réseau secondaire (R_DOM2, R_VISITE ) en association avec au moins une application multi-écrans.

Pour cela, le dispositif DISP dispose d'API (pour *« Application Programmable Interface »)* de :
- configuration de l'accès distant aux applications multi-écrans souscrites par l'utilisateur depuis son réseau domestique principal R_DOM1. L'utilisateur peut alors paramétrer, par exemple via un portail d'administration de services, à quels services multimédias il peut accéder en dehors de sa résidence principale ;
- gestion des équipements multimédias permettant de visualiser un contenu numérique donné (programmes TV, VOD par abonnement) ou de consommer un service Internet donné (YouTube^{®}, NetFlix^{®}, ...), et intégrant notamment la gestion des qualités disponibles sur les équipements multimédias grâce au contrôle opérateur de la configuration du réseau domestique étendu. Dans un exemple, ce contrôle est statique (abonnement d'accès réseau fixe et mobile) et/ou dynamique (test de bande passante depuis une application mobile APP) ;
- configuration de la session de communication entre l'application mobile APP et l'équipement multimédia retenu par le client.

Le dispositif DISP selon l'invention est également configuré pour recevoir une requête de lancement d'une application multi-écrans, en provenance d'un terminal mobile TER, via le réseau domestique étendu, c'est-à-dire, soit via le réseau domestique principal R_DOM1, soit le réseau secondaire (R_DOM2, R_VISITE), fournir, au terminal mobile TER, sur réception de la requête de lancement, la liste d'équipements multimédias ASS_S-EQ du réseau domestique étendu ayant accès aux applications multi-écrans demandée, et recevoir, en provenance du terminal mobile TER, un identifiant de l'équipement que l'utilisateur a choisi pour consommer un programme ou un contenu numérique.

En particulier, selon l'invention, lorsque le terminal mobile TER se trouve connecté à un réseau secondaire (R_DOM2, R_VISITE), le dispositif DISP est configuré pour fournir au terminal mobile TER, sur réception de la requête de lancement, la liste d'équipements multimédias ASS_S-EQ du réseau secondaire (R_DOM2, R_VISITE) ayant accès aux applications multi-écrans demandées.

En d'autres termes, la passerelle virtuelle PAS, *via* le dispositif DISP de gestion du réseau domestique étendu selon l'invention, dispose pour chaque application multi-écrans d'une liste d'équipements ASS_S-EQ du réseau domestique étendu sur lesquels l'application multi-écrans peut être exécutée. Pour cela, le dispositif DISP demande à l'utilisateur, via le terminal TER, sur quel équipement du réseau domestique étendu l'application multi-écrans demandée doit être exécutée.

Dans un mode particulier de réalisation selon l'invention, le dispositif DISP est en outre configuré pour mémoriser une liste d'applications multi-écrans associées chacune à une adresse de localisation de ressource (URL), et fournir à un équipement du réseau domestique étendu (PM1, TVC1, DEC1, PM2, TVC2, DEC2) ou au terminal mobile TER, l'URL permettant de lancer l'application multi-écrans.

Selon le mode particulier de réalisation décrit ici, lorsqu'un utilisateur souhaite lancer une application multi-écrans, l'utilisateur utilise une application APP non spécifique à l'application multi-écrans visée, mais spécifique au dispositif DISP de gestion de réseau domestique étendu selon l'invention. Par exemple, l'utilisateur a installé l'application APP sur son terminal mobile TER. Sur requête de l'utilisateur, l'application APP communique avec le dispositif DISP situé dans la passerelle virtuelle PAS, via le réseau local dans lequel se trouve l'utilisateur, pour demander l'exécution de l'application multi-écrans désirée, par exemple en sélectionnant l'application multi-écrans dans une liste affichée par l'application APP.

Dans un exemple, l'utilisateur se trouve dans sa résidence principale. Sur requête de l'utilisateur, l'application APP communique avec le dispositif DISP situé dans la passerelle virtuelle PAS, via la passerelle PAS1 du réseau domestique principal R_DOM1.

Dans un autre exemple en lien avec la figure 2A, lorsque l'utilisateur se trouve dans sa résidence secondaire, comme par exemple sa maison de vacances, l'application APP communique avec le dispositif DISP situé dans la passerelle virtuelle PAS, via la passerelle PAS2 du réseau domestique secondaire R_DOM2.

Dans un autre exemple en lien avec la figure 2B, lorsque l'utilisateur utilise en itinérance un réseau mobile ou fixe visité R_VISITE, comme par exemple le réseau domestique chez un ami, l'application APP communique directement avec le dispositif virtuel DISP situé dans la passerelle virtuelle PAS.

La passerelle virtuelle PAS se charge alors d'obtenir l'URL (pour *« Uniform Ressource Locator »* en anglais) permettant d'accéder à l'application multi-écrans désirée. Par exemple, selon un mode particulier de réalisation de l'invention, la passerelle virtuelle PAS dispose d'une table de correspondance associant pour chaque application multi-écrans disponible sur un équipement du réseau domestique étendu, une adresse de localisation de ressource URL permettant l'accès sur le réseau de communication R_EXT aux données de l'application multi-écrans.

Selon un autre mode particulier de réalisation de l'invention, la passerelle virtuelle PAS, via le dispositif virtuel DISP, vérifie si l'application multi-écrans demandée peut être lancée sur un équipement multimédia. Par exemple, pour certaines applications multi-écrans, le dispositif DISP dispose d'une API (pour *« Application Programmable Interface* ») permettant d'accéder à un serveur de droits associé à l'application multi-écrans et vérifie si les droits d'accès de l'utilisateur à l'application multi-écrans sont valides. Par exemple, le dispositif DISP vérifie, via un identifiant de l'utilisateur fourni par l'opérateur auprès duquel l'utilisateur est abonné, si l'utilisateur est autorisé à accéder à l'application multi-écrans: par exemple si son abonnement auprès de l'opérateur le lui permet, ou bien en cas d'accès payant, si son abonnement auprès de l'opérateur autorise l'accès à des applications payantes.

Ainsi, selon ce mode particulier de réalisation de l'invention, lorsque le terminal mobile TER est connecté à un réseau domestique secondaire R_DOM2 (figure 2A) ou en itinérance à un réseau visité R_VISITE (figure 2B), le dispositif DISP situé dans la passerelle virtuelle PAS vérifie si l'application multi-écrans demandée peut être lancée sur un équipement multimédia (PM2, TVC2, DEC2) du réseau secondaire (R_DOM2, R_VISITE) sélectionné par l'utilisateur. Après réception de l'identifiant de l'équipement multimédia sélectionné, le dispositif virtuel DISP de gestion consulte les paramètres de communication CONT_COM_APP-EQ entre l'application et l'équipement multimédia sélectionné (certificats, chiffrement, etc...), qui sont ensuite transmis au terminal TER, via l'application pilote APP.

Selon un autre exemple, la passerelle domestique PAS met en œuvre une politique de contrôle parental. Par exemple, elle vérifie, à partir de l'identité de l'utilisateur du terminal TER qui est alors comprise dans une réponse à une requête d'authentification en réponse à la requête de lancement de l'application multi-écrans, si cet utilisateur est autorisé à accéder à l'application multi-écrans demandée, en fonction de l'heure par exemple, ou bien si l'utilisateur est autorisé à utiliser l'équipement multimédia demandé.

Lorsque la passerelle virtuelle PAS a obtenu l'URL de l'application demandée, éventuellement en fonction de l'équipement multimédia sur lequel l'application multi-écrans doit être lancée, l'URL est transmise soit directement à l'équipement multimédia, soit au terminal TER qui la fournit à l'équipement multimédia.

Dans le mode de réalisation selon la figure 2A, le contenu de l'application est ensuite transmis à l'équipement multimédia, sur requête de celui-ci à l'URL reçue, par exemple par le serveur multimédia S_AV, via le réseau de communication R_EXT, la passerelle domestique PAS2 et le réseau domestique R_DOM2.

Dans le mode de réalisation selon la figure 2B, le contenu de l'application est ensuite transmis à l'équipement multimédia via le réseau de communication R_EXT, le terminal mobile TER et le réseau visité R_VISITE.

Le principe de l'invention est décrit ici dans le cas d'une application multi-écrans. Toutefois, le principe de l'invention s'applique également à tout autre application ou service pouvant être lancé via une application de pilotage installée sur un terminal dont l'exécution est déportée sur un autre équipement du réseau domestique étendu.

La **figure** 3 illustre des étapes de la phase d'initialisation du procédé de gestion d'un réseau domestique étendu selon un mode particulier de réalisation de l'invention. Le procédé de gestion d'un réseau domestique étendu est mis en œuvre par un dispositif DISP de gestion d'un réseau domestique étendu, par exemple compris dans la passerelle virtuelle PAS située dans le réseau de l'opérateur (« Cloud »).

Dans ce mode de réalisation, on considère que l'application multi-écrans, qu'on appelle également ici application de contenus multimédias, est installée sur un équipement multimédia du réseau domestique étendu (DEC1, PM1, TVC1, DEC2, PM2, TVC2) et l'application de pilotage APP est installée sur un terminal mobile TER, comme par exemple un smartphone. L'utilisateur se trouve dans sa résidence principale et son terminal mobile TER est alors connecté au réseau domestique principal R_DOM1.

Le procédé comprend une phase de pré-initialisation (non représentée) au cours de laquelle le dispositif DISP de gestion d'un réseau domestique étendu mémorise une table de correspondance associant des applications multi-écrans à une adresse de localisation de ressource URL permettant à un équipement multimédia du réseau domestique étendu (R_DOM1, R_DOM2, R_VISITE) d'accéder, via le réseau de communication de l'opérateur, par exemple R_EXT des figures 2A et 2B, aux données permettant l'exécution de l'application multi-écrans sur ledit équipement multimédia.

Par exemple, la table de correspondance peut être fournie par l'opérateur auprès duquel l'utilisateur est abonné. Selon un autre exemple, la table de correspondance est créée et mise à jour lorsqu'un équipement multimédia associé à une application multi-écrans s'enregistre sur le réseau domestique étendu (R_DOM1, R_DOM2, R_VISITE). Chaque application multi-écrans mémorisée comprend un identifiant associé à une URL. Par défaut, chaque application multi-écrans est associée à un équipement multimédia du réseau domestique étendu (R_DOM1, R_DOM2, R_VISITE). Cet équipement multimédia peut-être associé par défaut par l'opérateur ou bien par l'utilisateur au cours d'une phase d'initialisation décrite ci-dessous, ou encore lors de l'enregistrement de l'équipement multimédia sur le réseau domestique étendu.

Pour chaque application multi-écrans dont un identifiant est mémorisé dans le dispositif virtuel DISP de gestion de réseau domestique étendu, une liste d'équipements multimédia du réseau domestique étendu sur lesquels l'application multi-écrans peut être exécutée est mémorisée.

En particulier, selon un mode de réalisation de l'invention, au cours de la phase d'initialisation, l'utilisateur, via une interface graphique de l'application pilote APP installée sur son terminal mobile TER, configure un mode d'accès distant aux services TV ou applications multi-écrans souscrits. En d'autres termes, depuis son réseau domestique principal R_DOM1, l'utilisateur peut configurer l'accès à des services TV auxquels il a souscrit, lorsqu'il se trouve en dehors de sa résidence principale, c'est-à-dire lorsqu'il se trouve dans son réseau domestique secondaire R_DOM2 (Figure 2A) ou en itinérance dans un réseau visité R_VISITE (Figure 2B).

Pour cela, dans une étape E30, l'application pilote APP installée sur le terminal mobile TER envoie, via la passerelle domestique PAS1 du réseau domestique principal R_DOM1 (E30'), une requête de configuration du mode d'accès distant au dispositif virtuel DISP.

Au cours d'une étape E31, le dispositif DISP commence la configuration de l'accès distant en redirigeant la requête de configuration de l'accès distant vers les API décrits précédemment pour un affichage à l'utilisateur via l'interface graphique de l'application pilote APP.

Le dispositif virtuel de gestion DISP vérifie l'authenticité de l'application pilote APP lors d'une étape E32, par exemple en vérifiant l'authenticité du certificat. Autrement dit, il vérifie par exemple si l'application pilote APP est une application authentifiée par une autorité compétente. En particulier, le dispositif virtuel de gestion DISP peut vérifier si le certificat est un certificat autorisé par l'opérateur de réseau auprès duquel l'utilisateur est abonné.

Lors de l'étape E33, l'utilisateur, via l'interface graphique de l'application pilote APP, configure ses droits d'accès aux services TV souscrits, lorsqu'il souhaite utiliser ces services en dehors du réseau domestique principal R_DOM1. L'utilisateur peut également paramétrer les qualités de contenus numériques qui sont disponibles par les équipements multimédias du réseau secondaire, ainsi que les paramètres de sessions de communication entre l'application pilote APP et l'équipement multimédia retenu par l'utilisateur.

Dans un exemple, sur requête de l'utilisateur, le dispositif DISP associe au moins un équipement (DEC2, PM2, TVC2) du réseau secondaire, comme par exemple le réseau domestique secondaire R_DOM2, ou le réseau visité R_VISITE, avec une application multi-écrans choisie. Ainsi, depuis son réseau domestique principal, l'utilisateur peut, pour chaque équipement du réseau secondaire, associer ou interdire des droits d'accès et de consommation à des services TV. Le dispositif DISP mémorise alors une liste ASS_S-EQ d'équipements du réseau secondaire en association avec des applications multi-écrans auxquelles les équipements se trouvant en dehors du réseau domestique principal R_DOM1 ont accès.

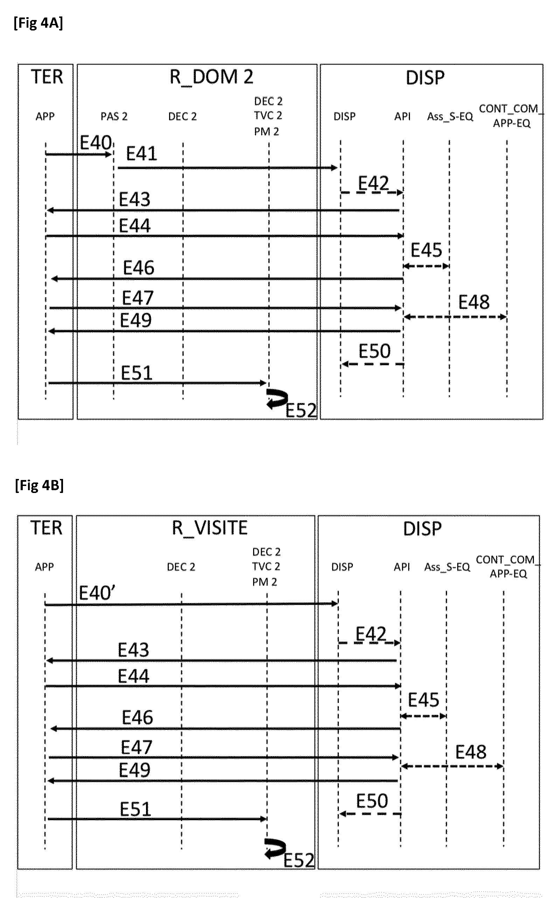

Les **figures 4A** et **4B** illustrent des étapes de la phase de découverte du procédé de gestion d'un réseau domestique selon un mode particulier de réalisation de l'invention en lien avec les figures 2A et 2B respectivement.

Dans le mode de réalisation en lien avec la **figure 4A****,** depuis son application pilote APP installée sur son terminal mobile TER, l'utilisateur souhaite accéder à un service, comme par exemple commander la visualisation d'un programme ou d'un contenu sur un terminal de visualisation (TVC2, DEC2/TV2', PM2/TV2) sur le réseau domestique secondaire R_DOM2 et invoque le dispositif virtuel DISP. Pour cela, lors d'une étape E40, l'application pilote APP envoie une requête de lancement de l'application multi-écrans qui transite par la passerelle domestique PAS2 lors d'une étape E41. Cette requête de lancement est, par exemple, une requête de souscription à l'application multi-écrans. Elle comprend notamment un identifiant de l'application multi-écrans permettant au dispositif de gestion DISP d'identifier l'application multi-écrans visée par la requête.

Au cours d'une étape E42, le dispositif DISP commence la découverte des équipements multimédias supportant le service TV demandé en redirigeant la requête vers les API décrits précédemment pour un affichage à l'utilisateur via l'interface graphique de l'application pilote APP.

Lors des étapes E43 et E44, le dispositif DISP procède à l'authentification de l'application APP, comme au cours de l'étape E32 de la phase d'initialisation (Figure 3). Il vérifie également si les droits d'accès de l'utilisateur à l'application multi-écrans demandée sont valides.

Dans une étape E45, le dispositif DISP récupère alors la liste ASS_S_EQ des équipements multimédias du réseau domestique secondaire R_DOM2 compatibles avec le service TV demandé et vérifie les droits d'accès des équipements au service demandé.

Lors d'une étape E46, le dispositif DISP de gestion du réseau domestique étendu transmet au terminal TER la liste d'équipements multimédias associés à l'application multi-écrans demandée. L'utilisateur du terminal TER peut ainsi sélectionner l'équipement multimédia souhaité. Par exemple, si l'utilisateur a demandé le lancement d'une application de Vidéo-à-la-demande, et que le dispositif DISP de gestion a mémorisé la liste suivante d'équipements multimédias compatibles avec cette application: le décodeur DEC2, la télévision connectée TVC2, la passerelle multimédia PM2 de la figure 2A, l'utilisateur peut choisir un des équipements multimédias présentés.

En variante, l'utilisateur peut choisir plusieurs équipements multimédias, par exemple dans le cas d'un même contenu audio-visuel visualisé dans des pièces différentes, ou bien d'un jeu en ligne accédé par deux utilisateurs du réseau domestique.

Au cours d'une étape E47, le dispositif DISP de gestion de réseau domestique étendu reçoit, en provenance du terminal TER, un identifiant de l'équipement multimédia sélectionné.

Après réception de l'identifiant de l'équipement multimédia sélectionné, le dispositif virtuel DISP de gestion consulte, dans une étape E48, les paramètres de communication entre l'application et l'équipement multimédia sélectionné (certificats, chiffrement, etc...) CONT_COM_APP-EQ, qui sont ensuite transmis, lors d'une étape E49, au terminal TER, via l'application pilote APP.

Ces paramètres ont été préalablement configurés par l'utilisateur lors de la phase d'initialisation.

Dans un mode de réalisation particulier de l'invention, le dispositif DISP de gestion de réseau domestique étendu vérifie si l'équipement multimédia sélectionné est autorisé à exécuter l'application multi-écrans demandée.

Par exemple, une politique de contrôle parental peut être mise en œuvre. Dans ce cas, la requête de lancement comprend également un identifiant fourni par l'utilisateur du terminal TER permettant d'identifier si l'utilisateur est autorisé à lancer l'application multi-écrans, ou à utiliser l'équipement audio-visuel sélectionné par exemple.

Selon un autre exemple, des droits d'accès à l'application multi-écrans demandée sont vérifiés. Les droits d'accès peuvent être de différentes natures, par exemple, ils peuvent correspondre aux droits d'accès à l'application de l'utilisateur à partir de son identifiant, ou aux droits d'accès au contenu en fonction du profil de l'utilisateur, ou encore au droit d'accès à la qualité de codage en fonction des caractéristiques de l'équipement audio-visuel ou du débit disponible. En effet, lors de la phase de découverte, le dispositif DISP de gestion du réseau domestique étendu connait le débit du réseau secondaire domestique R_DOM 2, en interrogeant éventuellement la passerelle d'accès aux services PAS2, et peut autoriser ou non certaines qualités (par exemple 8k, 4k, ...).

S'il est vérifié que l'équipement audio-visuel sélectionné est autorisé à exécuter l'application multi-écrans demandée ou si aucun contrôle n'est mis en œuvre, le dispositif DISP de gestion de réseau domestique étendu obtient l'URL associée à l'application multi-écrans demandée à partir de sa table de correspondance.

Selon un mode particulier de réalisation, l'URL dépend également de l'équipement audio-visuel sélectionné. Par exemple, une URL peut être associée à des formats particuliers qui sont plus appropriés pour certains types d'équipements audio-visuels que d'autres types d'équipements audio-visuels. Par exemple, pour un même contenu audio-visuel, il est possible d'utiliser un protocole de transport du contenu audio-visuel, ou un codage du contenu audio-visuel ou une solution de protection DRM différents en fonction de l'équipement audio-visuel.

La procédure de découverte prend alors fin dans une étape E50 et le dispositif virtuel DISP de gestion de réseau domestique étendu transmet l'URL obtenue à l'équipement multimédia sélectionné, ou bien au terminal TER. L'utilisateur peut alors lancer, à une étape E51, la visualisation du contenu demandé sur l'équipement multimédia sélectionné, par exemple la télévision connectées TVC2, puis visualiser le contenu lors d'une étape E52.

Dans le mode de réalisation en lien avec la **figure 4B****,** le réseau secondaire est un réseau visité mobile ou fixe R_VISITE ne comprenant pas de passerelle domestique PAS2 (Figure 2B). Le réseau visité peut-être un réseau mobile ou fixe, un réseau « tiers » (ami, hôtel, location, ...) ou le réseau Internet. En particulier, la passerelle d'accès aux services sur le réseau visité n'est pas impliquée.

Dans ce mode de réalisation, le terminal mobile TER contacte le dispositif DISP de gestion du réseau domestique étendu directement dans une étape E40'.

Ainsi, depuis son application pilote APP sur son terminale mobile TER, l'utilisateur souhaite commander la visualisation d'un programme ou d'un contenu sur un terminal de visualisation (TVC2, DEC2/TV2', PM2/TV2) sur un réseau visité et invoque le dispositif virtuel DISP via Internet R_EXT.

Lors de la phase de découverte, le dispositif DISP de gestion du réseau domestique étendu connaît le débit du réseau visité en identifiant la session de l'utilisateur (accès 5G, 4G+, Internet, ...) et le profil de l'utilisateur (par exemple abonnement fixe associé à l'abonnement mobile dans le cas d'une offre convergente), puis éventuellement en lançant un test de bande passante sur l'application.

Au cours de l'exécution de l'application multi-écrans, le dispositif de gestion vérifie périodiquement si la bande passante du réseau domestique étendu ou du réseau d'accès est suffisante pour permettre l'exécution de l'application multi-écrans demandée. Ce mode particulier permet d'éviter d'impacter les autres services fournis par le réseau domestique étendu déjà en cours et d'assurer une qualité de service garantie lors de l'exécution de l'application multi-écrans. Si ce n'est pas le cas, le dispositif virtuel DISP de gestion de réseau domestique étendu peut mettre en œuvre une politique de gestion de services en fonction par exemple d'une priorité associée aux services et aux applications multi-écrans. Ainsi, si l'application multi-écrans est prioritaire par rapport à d'autres services en cours sur le réseau domestique étendu, le dispositif de gestion peut mettre fin à ces autres services, ou diminuer leur qualité pour permettre l'exécution de l'application multi-écrans demandée.

Lorsqu'un mécanisme de contrôle parental est mis en place au niveau du dispositif virtuel DISP de gestion, il peut filtrer également les requêtes de lancement de certains contenus multimédia en fonction des métadonnées comprises dans les flux audio-visuels, pour éviter la diffusion de contenus multimédia non adaptés au jeune public. Le filtrage peut également intervenir en fonction de contraintes horaires ou de durée, ou encore d'un prix à payer pour le contenu multimédia.

Selon ce mode particulier de réalisation de l'invention, la liste des applications multi-écrans et des équipements audio-visuels disponibles pour exécuter ces applications multi-écrans est mise à jour à chaque fois qu'un équipement multimédia se connecte au réseau domestique étendu de la passerelle virtuelle PAS.

Ainsi, le procédé décrit en relation avec les figures 4A et 4B comprend en outre une étape (non représentée) au cours de laquelle une notification d'enregistrement d'un équipement multimédia dans le réseau domestique étendu est reçue par la passerelle virtuelle PAS.

Dans le cas où le dispositif virtuel DISP de gestion du réseau domestique étendu est distinct de la passerelle le PAS, la notification d'enregistrement de l'équipement multimédia est transmise par la passerelle virtuelle au dispositif virtuel DISP de gestion.

Une telle notification d'enregistrement comprend une information de capacités de l'équipement multimédia ayant émis la notification. Cette information de capacités permet à la passerelle virtuelle PAS de savoir quelles applications multi-écrans l'équipement multimédia est apte à exécuter. Par exemple, l'information de capacités peut indiquer un identifiant d'une application multi-écrans, ou bien un type d'équipement audio-visuel, par exemple une version d'un système d'exploitation de l'équipement multimédia ou un identifiant d'un type d'équipement multimédia, ou bien des caractéristiques de l'écran ou des haut-parleurs de l'équipement multimédia. A partir du type de l'équipement multimédia, la passerelle virtuelle PAS peut ainsi déterminer quelles applications multi-écrans peuvent être exécutées par cet équipement multimédia, par exemple en se référant à une base de données listant les applications multi-écrans compatibles avec un type d'équipement multimédia.

Ainsi, pour chaque application multi-écrans dont un identifiant est mémorisé dans la passerelle virtuelle PAS, la liste d'équipements multimédias du réseau domestique étendu associée à cette application multi-écrans est mise à jour en fonction de l'information de capacités de l'équipement audio-visuel qui s'enregistre dans le réseau domestique étendu.

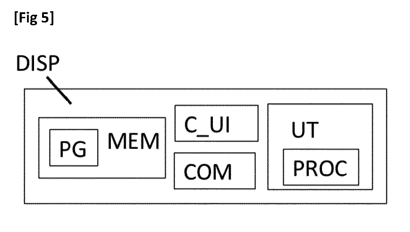

La **figure** 5 illustre la structure simplifiée d'un dispositif DISP de gestion d'un réseau domestique étendu selon un mode particulier de réalisation de l'invention. Un tel dispositif virtuel de gestion d'un réseau domestique étendu est configuré pour mettre en œuvre le procédé de gestion d'un réseau domestique étendu selon l'un quelconque des modes particuliers de réalisation de l'invention décrit ci-dessus.

Selon un mode particulier de réalisation de l'invention, le dispositif DISP a l'architecture classique d'un ordinateur et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de gestion d'un réseau domestique étendu tel que décrit précédemment, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en œuvre les étapes du procédé de gestion d'un réseau domestique étendu selon l'un quelconque de modes particuliers de réalisation décrits en relation avec les figures 3, 4A ou 4B, selon les instructions du programme d'ordinateur PG.

La mémoire MEM est configurée pour mémoriser une liste d'applications multi-écrans pouvant être exécutées par un équipement audio-visuel du réseau domestique étendu, et en particulier du réseau secondaire, comme par exemple un réseau domestique secondaire ou un réseau mobile ou fixe visité. Une telle liste comprend un identifiant d'une application multi-écrans associé à une adresse de localisation de ressource (URL) permettant d'accéder aux données de l'application multi-écrans.

Selon un mode particulier de réalisation de l'invention, la mémoire MEM est également configurée pour mémoriser une liste d'équipements audio-visuels du réseau domestique étendu en association avec au moins une application multi-écrans de la liste.

Dans une variante, une application multi-écrans peut être associée à plusieurs URLs distinctes qui sont fonction de l'équipement audio-visuel qui est susceptible de l'exécuter. Ainsi, pour une même application multi-écrans, des URLs distinctes sont associées à au moins deux équipements audio-visuels distincts de la liste d'équipements audio-visuels associée à l'application multi-écrans.

Selon un mode particulier de réalisation de l'invention, le dispositif DISP comprend un module de communication COM configuré pour établir des communications avec un réseau IP, et/ou une passerelle domestique.

Notamment, le module de communication COM permet au dispositif DISP de recevoir des données relatives à une application multi-écrans exécutée par un équipement audio-visuel du réseau domestique étendu (DEC1, PM1, TVC1 ou DEC2, PM2, TVC2 de la figure 2A). Par exemple, une telle application multi-écrans peut être un service audio-visuel.

Selon un mode particulier de réalisation de l'invention, le module de communication COM permet également au dispositif DISP de recevoir des informations de mise à jour de droits d'accès à une application multi-écrans en provenance par exemple d'un serveur d'un fournisseur de l'application multi-écrans, et/ou une mise à jour de la liste d'applications multi-écrans mémorisée et des URLs associées. Des telles informations de mise à jour peuvent être reçues en mode notification (mode "push" en anglais) ou bien en mode synchronisation en réponse à une requête du dispositif DISP (mode "pull" en anglais).

Selon un mode particulier de réalisation de l'invention, le dispositif DISP comprend un port de communication C_UI apte à établir une liaison de communication avec des dispositifs d'interaction et recevoir des signaux de commande relatifs à un service audio-visuel ou une application multi-écrans à exécuter par un équipement audio-visuel du réseau domestique étendu. Par exemple, un tel port de communication permet au dispositif DISP de recevoir une commande de lancement d'une application multi-écrans en provenance du terminal mobile TER de la figure 2B et de communiquer avec lui.

Le dispositif DISP comprend également des ports de communication (non représentés) permettant au dispositif DISP de communiquer avec des équipements audio-visuels du réseau domestique, et notamment de leur transmettre une URL permettant de lancer une application multi-écrans sur un tel équipement audio-visuel.

Par exemple, de tels ports de communication peuvent correspondre à des ports Ethernet, prise USB, module Bluetooth, NFC, Infrarouge, WIFI, etc...

## Revendications

1. Dispositif de gestion d'un réseau domestique étendu, ledit réseau domestique étendu comprenant un réseau domestique principal (R_DOM1) dont l'utilisateur a une souscription pour des services auprès d'un opérateur, et au moins un réseau local secondaire visité par l'utilisateur (R_DOM2, R_VISITE), ledit au moins un réseau secondaire comprenant au moins un équipement (DEC2, PM2, TVC2) adapté pour exécuter au moins une application à partir d'une adresse de localisation de ressource, ladite adresse de localisation de ressource permettant audit équipement d'accéder, via un réseau de communication, à au moins une donnée permettant l'exécution de ladite au moins une application sur ledit équipement, ledit dispositif de gestion est configuré pour :
- recevoir, via ledit réseau domestique principal (R_DOM1), une requête d'association dudit au moins un équipement (DEC2, PM2, TVC2) dudit réseau secondaire (R_DOM2, R_VISITE) avec ladite au moins une application,
- mémoriser une liste d'équipements dudit réseau secondaire en association avec ladite au moins une application,
- recevoir une requête de lancement de ladite au moins une application, en provenance d'un terminal, via ledit réseau secondaire, ladite requête comprenant un identifiant de ladite au moins une application,
- fournir, audit terminal, sur réception de ladite requête de lancement, ladite liste d'équipements,
- recevoir, en provenance dudit terminal, un identifiant d'un équipement de ladite liste.

2. Dispositif de gestion d'un réseau domestique étendu selon la revendication 1, configuré pour, en outre :
- mémoriser une liste d'applications comprenant au moins un identifiant de ladite au moins une application, ledit identifiant étant associé à ladite adresse de localisation de ressource,
- fournir audit équipement ou audit terminal, via ledit réseau secondaire, ladite adresse de localisation de ressource associée audit identifiant.

3. Dispositif de gestion d'un réseau domestique étendu selon les revendications 1 ou 2, dans lequel la liste d'équipements dudit réseau secondaire associée à ladite au moins une application est mise à jour lors de la réception d'une notification d'enregistrement d'un nouvel équipement dans ledit réseau secondaire en fonction d'une information de capacités dudit nouvel équipement comprise dans la notification d'enregistrement.

4. Dispositif de gestion d'un réseau domestique étendu selon l'une quelconque des revendications 1 à 3, configuré en outre pour vérifier si ledit équipement est autorisé à exécuter ladite application, ladite adresse de localisation de ressource étant fournie audit équipement par le dispositif de gestion de réseau domestique étendu si ledit équipement est autorisé à exécuter ladite application.

5. Équipement placé dans un réseau de communication et comprenant des ressources dédiées à un réseau domestique étendu d'un utilisateur abonné auprès d'un opérateur du réseau de communication, ledit équipement comprenant un dispositif de gestion selon l'une quelconque des revendications 1 à 4.

6. Procédé de gestion d'un réseau domestique étendu, ledit réseau domestique étendu comprenant un réseau domestique principal (R_DOM1) dont l'utilisateur a une souscription pour des services auprès d'un opérateur, et au moins un réseau local secondaire visité par l'utilisateur (R_DOM2, R_VISITE) , ledit au moins un réseau secondaire comprenant au moins un équipement (DEC2, PM2, TVC2) adapté pour exécuter au moins une application à partir d'une adresse de localisation de ressource, ladite adresse de localisation de ressource permettant audit équipement d'accéder, via un réseau de communication, à au moins une donnée permettant l'exécution de ladite au moins une application sur ledit équipement, ledit procédé étant mis en œuvre par un dispositif de gestion du réseau domestique étendu et comprenant :
- une réception, via ledit réseau domestique principal (R_DOM1), d'une requête d'association dudit au moins un équipement (DEC2, PM2, TVC2) dudit réseau secondaire (R_DOM2, R_VISITE) avec ladite au moins une application,
- une mémorisation d'une liste d'équipements du réseau secondaire en association avec ladite au moins une application,
- une réception d'une requête de lancement de ladite au moins une application, en provenance d'un terminal, via le réseau secondaire, ladite requête comprenant ledit identifiant de ladite au moins une application,
- une fourniture audit terminal, sur réception de ladite requête de lancement, de ladite liste d'équipements,
- une réception, en provenance dudit terminal, d'un identifiant d'un équipement de ladite liste.

7. Procédé de gestion d'un réseau domestique étendu selon la revendication 6, comprenant en outre :
- une mémorisation d'une liste d'applications comprenant au moins un identifiant de ladite au moins une application, ledit identifiant étant associé à ladite adresse de localisation de ressource,
- une fourniture, audit équipement ou au terminal, via ledit réseau secondaire, de ladite adresse de localisation de ressource associée audit identifiant.

8. Procédé de gestion d'un réseau domestique étendu selon les revendications 6 ou 7, comprenant en outre :
- une réception d'une notification d'enregistrement d'un nouvel équipement dans le réseau secondaire comprenant une information de capacités dudit nouvel équipement ;
- une mise à jour de ladite liste d'équipements du réseau secondaire associée à ladite au moins une application en fonction de ladite information de capacités dudit nouvel équipement.

9. Procédé de gestion d'un réseau domestique étendu selon l'une quelconque des revendications 6 à 8, comprenant en outre :
- une vérification si ledit équipement est autorisé à exécuter ladite application, ladite adresse de localisation de ressource étant fournie audit équipement par ledit dispositif de gestion de réseau domestique étendu si ledit équipement est autorisé à exécuter ladite application.

10. Programme d'ordinateur comportant des instructions pour la mise en œuvre du procédé selon l'une quelconque des revendications 6 à 9, lorsque le programme est exécuté par un processeur d'un dispositif de gestion.

11. Support d'enregistrement lisible par un ordinateur sur lequel est enregistré un programme d'ordinateur selon la revendication 10.

## Patentansprüche

1. Vorrichtung zur Verwaltung eines erweiterten Heimnetzwerks, wobei das erweiterte Heimnetzwerk ein Hauptheimnetzwerk (R_DOM1), dessen Benutzer ein Abonnement für Dienste bei einem Anbieter hat, und mindestens ein sekundäres lokales Netzwerk, das von dem Benutzer besucht wird (R_DOM2, R_VISITE), umfasst, wobei das mindestens eine sekundäre Netzwerk mindestens ein Gerät (DEC2, PM2, TVC2) umfasst, das dazu geeignet ist, mindestens eine Anwendung von einer Ressourcenstandortadresse aus auszuführen, wobei die Ressourcenstandortadresse es dem Gerät ermöglicht, über ein Kommunikationsnetzwerk auf mindestens ein Datenelement zuzugreifen, das die Ausführung der mindestens einen Anwendung auf dem Gerät ermöglicht, wobei die Vorrichtung zur Verwaltung dazu ausgestaltet ist:
- über das Hauptheimnetzwerk (R_DOM1) eine Anforderung zur Zuordnung des mindestens einen Geräts (DEC2, PM2, TVC2) des sekundären Netzwerks (R_DOM2, R_VISITE) zu der mindestens einen Anwendung zu empfangen,
- eine Geräteliste des sekundären Netzwerks unter Zuordnung zu der mindestens einen Anwendung zu speichern,
- eine Anforderung zum Starten der mindestens einen Anwendung von einem Endgerät über das sekundäre Netzwerk zu empfangen, wobei die Anforderung eine Kennung der mindestens einen Anwendung umfasst,
- dem Endgerät beim Empfangen der Anforderung zum Starten die Geräteliste bereitzustellen,
- von dem Endgerät eine Kennung eines Geräts der Liste zu empfangen.

2. Vorrichtung zur Verwaltung eines erweiterten Heimnetzwerks nach Anspruch 1, die dazu ausgestaltet ist, ferner:
- eine Liste mit Anwendungen zu speichern, die mindestens eine Kennung der mindestens einen Anwendung umfasst, wobei die Kennung der Ressourcenstandortadresse zugeordnet ist,
- dem Gerät oder dem Endgerät über das sekundäre Netzwerk die der Kennung zugeordnete Ressourcenstandortadresse bereitzustellen.

3. Vorrichtung zur Verwaltung eines erweiterten Heimnetzwerks nach Anspruch 1 oder 2, wobei die Geräteliste des sekundären Netzwerks, die der mindestens einen Anwendung zugeordnet ist, beim Empfangen einer Benachrichtigung über die Registrierung eines neuen Geräts in dem sekundären Netzwerk in Abhängigkeit von einer Information über Fähigkeiten des neuen Geräts, die in der Benachrichtigung über die Registrierung enthalten ist, aktualisiert wird.

4. Vorrichtung zur Verwaltung eines erweiterten Heimnetzwerks nach einem der Ansprüche 1 bis 3, die ferner dazu ausgestaltet ist, zu überprüfen, ob das Gerät berechtigt ist, die Anwendung auszuführen, wobei die Ressourcenstandortadresse dem Gerät von der Vorrichtung zur Verwaltung eines erweiterten Heimnetzwerks bereitgestellt wird, wenn das Gerät berechtigt ist, die Anwendung auszuführen.

5. Gerät, das in einem Kommunikationsnetzwerk angeordnet ist und dedizierte Ressourcen für ein erweitertes Heimnetzwerk eines Benutzers umfasst, der bei einem Anbieter des Kommunikationsnetzwerks abonniert ist, wobei das Gerät eine Vorrichtung zur Verwaltung nach einem der Ansprüche 1 bis 4 umfasst.

6. Verfahren zur Verwaltung eines erweiterten Heimnetzwerks, wobei das erweiterte Heimnetzwerk ein Hauptheimnetzwerk (R_DOM1), dessen Benutzer ein Abonnement für Dienste bei einem Betreiber hat, und mindestens ein sekundäres lokales Netzwerk, das von dem Benutzer besucht wird (R_DOM2, R_VISITE), umfasst, wobei das mindestens eine sekundäre Netzwerk mindestens ein Gerät (DEC2, PM2, TVC2) umfasst, das dazu geeignet ist, mindestens eine Anwendung von einer Ressourcenstandortadresse aus auszuführen, wobei die Ressourcenstandortadresse es dem Gerät ermöglicht, über ein Kommunikationsnetzwerk auf mindestens ein Datenelement zuzugreifen, das die Ausführung der mindestens einen Anwendung auf dem Gerät ermöglicht, wobei das Verfahren von einer Vorrichtung zur Verwaltung des erweiterten Heimnetzwerks durchgeführt wird und umfasst:
- ein Empfangen, über das Hauptheimnetzwerk (R_DOM1), einer Anforderung zur Zuordnung des mindestens einen Geräts (DEC2, PM2, TVC2) des sekundären Netzwerks (R_DOM2, R_VISITE) zu der mindestens einen Anwendung,
- ein Speichern einer Geräteliste des sekundären Netzwerks unter Zuordnung zu der mindestens einen Anwendung,
- ein Empfangen einer Anforderung zum Starten der mindestens einen Anwendung von einem Endgerät über das sekundäre Netzwerk, wobei die Anforderung die Kennung der mindestens einen Anwendung umfasst,
- ein Bereitstellen der Geräteliste für das Endgerät beim Empfangen der Anforderung zum Starten,
- ein Empfangen einer Kennung eines Geräts der Liste von dem Endgerät.

7. Verfahren zur Verwaltung eines erweiterten Heimnetzwerks nach Anspruch 6, umfassend ferner:
- ein Speichern einer Liste mit Anwendungen, die mindestens eine Kennung der mindestens einen Anwendung umfasst, wobei die Kennung der Ressourcenstandortadresse zugeordnet ist,
- ein Bereitstellen der der Kennung zugeordneten Ressourcenstandortadresse über das sekundäre Netzwerk für das Gerät oder Endgerät.

8. Verfahren zur Verwaltung eines erweiterten Heimnetzwerks nach den Ansprüchen 6 oder 7, umfassend ferner:
- ein Empfangen einer Benachrichtigung über die Registrierung eines neuen Geräts in dem sekundären Netzwerk, die eine Information über Fähigkeiten des neuen Geräts beinhaltet;
- ein Aktualisieren der Geräteliste des sekundären Netzwerks, die der mindestens einen Anwendung zugeordnet ist, in Abhängigkeit von der Information über Fähigkeiten des neuen Geräts.

9. Verfahren zur Verwaltung eines erweiterten Heimnetzwerks nach einem der Ansprüche 6 bis 8, umfassend ferner:
- ein Überprüfen, ob das Gerät berechtigt ist, die Anwendung auszuführen, wobei die Ressourcenstandortadresse dem Gerät von der Vorrichtung zur Verwaltung eines erweiterten Heimnetzwerk bereitgestellt wird, wenn das Gerät berechtigt ist, die Anwendung auszuführen.

10. Computerprogramm, das Anweisungen umfasst, die bei der Ausführung des Programms durch einen Prozessor einer Vorrichtung zur Verwaltung das Verfahren nach einem der Ansprüche 6 bis 9 durchführen.

11. Computerlesbares Speichermedium, auf dem ein Computerprogramm nach Anspruch 10 gespeichert ist.

## Claims

1. Device for managing an extended home network, said extended home network comprising a main home network (R_DOM1) the user of which has a subscription for services with an operator and at least one secondary local-area network (R_DOM2, R_VISITE) visited by the user, said at least one secondary network comprising at least one equipment (DEC2, PM2, TVC2) configured to execute at least one application based on a resource location address, said resource location address allowing said equipment to access, via a communication network, at least one data item allowing the execution of said at least one application on said equipment, said managing device being configured to:
- receive, via said main home network (R_DOM1), a request to associate said at least one equipment (DEC2, PM2, TVC2) of said secondary network (R_DOM2, R_VISITE) with said at least one application,
- store a list of equipments of said secondary network in association with said at least one application,
- receive a request to launch said at least one application, from a terminal, via said secondary network, said request containing an identifier of said at least one application,
- provide, to said terminal, on receipt of said launch request, said list of equipments,
- receive, from said terminal, an identifier of an equipment of said list.

2. Device for managing an extended home network according to Claim 1, further configured to:
- store a list of applications comprising at least one identifier of said at least one application, said identifier being associated with said resource location address,
- provide to said equipment or to said terminal, via said secondary network, said resource location address associated with said identifier.

3. Device for managing an extended home network according to Claim 1 or 2, wherein the list of equipments of said secondary network associated with said at least one application is updated on receipt of a notification of registration of a new equipment in said secondary network depending on information on capabilities of said new equipment contained in the registration notification.

4. Device for managing an extended home network according to any one of Claims 1 to 3, further configured to check whether said equipment is permitted to execute said application, said resource location address being provided to said equipment by the device for managing the extended home network if said equipment is permitted to execute said application.

5. Equipment placed in a communication network and comprising resources dedicated to an extended home network of a user subscribed with an operator of the communication network, said equipment comprising a managing device according to any one of Claims 1 to 4.

6. Method for managing an extended home network, said extended home network comprising a main home network (R_DOM1) the user of which has a subscription for services with an operator and at least one secondary local-area network (R_DOM2, R_VISITE) visited by the user, said at least one secondary network comprising at least one equipment (DEC2, PM2, TVC2) configured to execute at least one application based on a resource location address, said resource location address allowing said equipment to access, via a communication network, at least one data item allowing the execution of said at least one application on said equipment, said method being implemented by a device for managing the extended home network and comprising:
- receiving, via said main home network (R_DOM1), a request to associate said at least one equipment (DEC2, PM2, TVC2) of said secondary network (R_DOM2, R_VISITE) with said at least one application,
- storing a list of equipments of the secondary network in association with said at least one application,
- receiving a request to launch said at least one application, from a terminal, via the secondary network, said request containing said identifier of said at least one application,
- providing, to said terminal, on receipt of said launch request, said list of equipments,
- receiving, from said terminal, an identifier of an equipment of said list.

7. Method for managing an extended home network according to Claim 6, further comprising:
- storing a list of applications comprising at least one identifier of said at least one application, said identifier being associated with said resource location address,
- providing to said equipment or to the terminal, via said secondary network, said resource location address associated with said identifier.

8. Method for managing an extended home network according to Claim 6 or 7, further comprising:
- receiving a notification of registration of a new equipment in the secondary network containing information on capabilities of said new equipment;
- updating said list of equipments of the secondary network associated with said at least one application depending on said information on capabilities of said new equipment.

9. Method for managing an extended home network according to any one of Claims 6 to 8, further comprising:
- verifying whether said equipment is permitted to execute said application, said resource location address being provided to said equipment by said device for managing the extended home network if said equipment is permitted to execute said application.

10. Computer program comprising instructions for the implementation of the method according to any one of Claims 6 to 9, when the program is executed by a processor of a managing device.

11. Computer-readable recording medium on which a computer program according to Claim 10 is recorded.
